Europäisches Patentamt

European Patent Office

Office européen des brevets

(11) Veröffentlichungsnummer : **0 077 936**
**B1**

(12) **EUROPÄISCHE PATENTSCHRIFT**

(45) Veröffentlichungstag der Patentschrift :
26.03.86

(21) Anmeldenummer : **82109159.2**

(22) Anmeldetag : **04.10.82**

(51) Int. Cl.⁴ : **H 02 K   3/28**

(54) **Drehstromwicklung für eine Hochspannungsmaschine.**

(30) Priorität : **16.10.81 DE 3141239**

(43) Veröffentlichungstag der Anmeldung :
**04.05.83 Patentblatt 83/18**

(45) Bekanntmachung des Hinweises auf die Patenterteilung : **26.03.86 Patentblatt 86/13**

(84) Benannte Vertragsstaaten :
**CH FR GB LI SE**

(56) Entgegenhaltungen :
**CH-A-    580 349**
**DE-C- 2 841 415**
**US-A- 3 600 619**

(73) Patentinhaber : **Siemens Aktiengesellschaft**
**Berlin und München Wittelsbacherplatz 2**
**D-8000 München 2 (DE)**

(72) Erfinder : **Auinger, Herbert, Dr.**
**Karl-Giermann-Strasse 11**
**D-8500 Nürnberg (DE)**

Jouve, 18, rue St-Denis, 75001 Paris, France

EP 0 077 936 B1

**Beschreibung**

Die Erfindung betrifft eine Drehstromwicklung für eine Hochspannungsmaschine nach dem Oberbegriff der Patentanspruchs 1.

Eine solche Drehstromwicklung ist aus der DE-PS 28 41 415 bekannt. Für darin beschriebene symmetrische Anordnungen der « Mit »- und « Gegen »-Spulengruppen in den einzelnen Strängen ergeben sich häufig relativ lange Schaltverbindungen, deren Zahl mit steigenden Polzahlen zunimmt, so daß insbesondere bei höherpoligen Maschinen unerwünscht viele Schaltverbindungen bei entsprechend vielen Kreuzungsstellen nebeneinander verlegt werden müssen. Eine Verlegung des Sternpunktes von den Strangenden U, V, W auf die Strangenden X, Y, Z ergibt bei einer solchen symmetrischen Ausführung keine Änderung der Potentialdifferenzen an den Phasenübergängen, da lediglich die Potentiale $|U_1|$ und $|U_2|$ vertauscht werden.

Bei Reihenschaltung aller Spulengruppen beträgt die Spannung einer Spulengruppe

$$U_{SG} = \frac{1}{2p} \cdot U_{ph} \quad \left( U_{ph} = \frac{U_N}{\sqrt{3}} \right)$$

mit $U_{ph}$ = Phasenspannung, $U_N$ = Netzspannung). Die Absolutwertsumme der Nachbarpotentiale an den Phasenübergängen ist bei der bekannten Wicklung $|U_1| + |U_2| = 2p\, U_{SG}$. Da die Nachbarpotentiale $U_1$ und $U_2$ um 120° elektrisch verschoben sind, ergibt sich die tatsächliche Spannungsbeanspruchung durch die vektorielle Addition beider Nachbarpotentiale gemäß

$$\Delta U = U_N \sqrt{\left( U_1 + \frac{1}{2} \cdot U_2 \right)^2 \div \left( \frac{1}{2} U_2 \cdot \sqrt{3} \right)^2} \cdot 1/(2p \cdot \sqrt{3}),$$

so daß bei $|U_1| + |U_2|$ = const die höchste Spannung dann auftritt, wenn eines der beiden Potentiale $U_1$, $U_2$ seinen Minimalwert hat.

Bei teilweisem Verzicht auf das Ordnungsprinzip $|U_1| + |U_2| = 2p \cdot U_{SG}$ = const durch unsymmetrische Anordnung können entsprechend den Hinweisen in der DE-PS 28 41 415 bei höherpoligen Wicklungen u. U. günstiger zu verlegende Schaltverbindungen erzielt werden. Geht man noch einen Schritt weiter und läßt gegenüber der symmetrischen Ausführung um etwa 10 bis 15 % höhere maximale Spannungen an den Phasenübergängen zu, dann kommt man, wie die Praxis gezeigt hat, bei einer solch unsymmetrisch angeordneten Drehstromwicklung für die häufig vorkommenden Polzahlen $2p < 10$ mit höchstens fünf nebeneinanderliegenden Spulengruppen-Schaltverbindungen aus.

Beim « Umsternen », d. h. bei Vertauschen der Klemmen U, V, W mit den Klemmen X, Y, Z einer derartig ausgeführten Drehstromwicklung mit « Mit »- und « Gegen »-Spulengruppen ergeben sich dagegen ähnlich hohe Spannungen wie bei den üblich ausgeführten Drehstromwicklungen mit durchwegs gleich ausgeführten Spulengruppen, bei denen die Potentialänderungsrichtung in sämtlichen Spulengruppen entweder gleichsinnig oder entgegengesetzt zur Durchflutungsrichtung gerichtet ist. Bei solchen üblichen Drehstromwicklungen für Hochspannungsmashinen ergibt sich die maximal anstehende Spannung bei Reihenschaltung der Spulengruppen an einem Phasenübergang im Bereich der herausgeführten Anschlußenden infolge der hohen Nachbarpotentiale $U_1 = 2p\, U_{SG} = U_{ph}$ am Anfang des einen Stranges und $U_2 = (2p - 1)\, U_{SG}$ in der benachbarten zweiten Spullengruppe des anderen Stranges. Die Spannungsdifferenz steigt mit zunehmender Polzahl von minimal $0.88\, U_N$ (bei $2p = 4$) auf nahezu die Netzspannung $U_N$ gemäß der Tabelle an.

Bei diesen bekannten üblichen Drehstromwicklungen werden maximal nur vier nebeneinanderliegende Spulengruppen-Schaltverbindungen benötigt. Die Absolutwertsumme der Nachbarpotentiale an der genannten ungünstigen Stelle beträgt $|U_1| + |U_2| = (4p - 1) \cdot U_{SG}$.

Der Erfindung liegt die Aufgabe zugrunde, eine Drehstromwicklung der eingangs genannten Art zu schaffen, die eine gegenüber der Normalausführung nur wenig erhöhte Zahl von wickelkopfseitig nebeneinander zu verlegenden Schaltverbindungen benötigt und welche beim « Umsternen » der Strangenden keine erhöhte Maximalspannung an den Phasenübergängen zur Folge hat, wobei gleichzeitig auch das Niveau dieser Maximalspannung nicht wesentlich über dem der bekannten symmetrischen Ausführung nach der DE-PS 28 41 415, jedoch deutlich unter dem der besagten üblichen Normalausführung liegen soll.

Eine allgemeine Lösung der gestellten Aufgabe gelingt für beliebige Polzahlen $2p \geqq 4$ durch die Maßnahmen nach dem Kennzeichen des Patentanspruchs 1. Eine spezielle Lösung der Aufgabe für Polzahlen $2p = 4$ gelingt entsprechend den kennzeichnenden Maßnahmen des Nebenanspruchs 2. Mit den kennzeichnenden Maßnahmen des Patentanspruchs 3 werden für Polzahlen $2p = 4$ wie bei den bekannten Wicklungen nur maximal vier nebeneinanderliegende Spulengruppen-Schaltverbindungen benötigt und ab $2p = 6$ sind hierbei an zwei Stellen des Umfanges maximal sechs solcher Schaltverbindungen erforderlich, die jeweils aber nur über den Umfangsbereich einer Spulengruppe aneinander vorbeizuführen sind.

Ab $2p \geqq 6$ liegen die mit dieser Schaltung erreichbaren Absolutwertsummen der Nachbarpotentiale am Phasenwechsel bei maximal $|U_1| + |U_2| = (3p - 2)\, U_{SG}$. Diese maximale Potentialsumme ergibt

2

sich, unabhängig davon, ob der Sternpunkt an den Klemmen U, V, W oder X, Y, Z gebildet wird, insgesamt an jeweils (p + 1) Stellen des Umfanges. Wie bereits erläutert wurde, tritt infolge der vektoriellen Addition der Nachbarpotentiale $U_1$ und $U_2$ der Höchstwert der Spannungsbeanspruchung an jenen Phasenübergängen auf, bei denen eines der Potentiale seinen Kleinstwert aufweist, was hiermit $|U_{1,2}|_{min} = (p - 1) U_{SG}$ an jeweils zwei Stellen des Umfanges der Fall ist.

Entsprechend den genannten Zusammenhängen steigt diese maximale Spannung mit zunehmender Polzahl leicht an. Für die am häufigsten vorkommenden Einsatzfälle bis 2p < 10 ist sie jedoch mit $\leq 0,64$ $U_N$ nur um rund 10 % höher als bei der symmetrischen Ausführung nach DE-PS 28 41 415 ; bei 2p = 16 liegt sie mit ca. 0,70 $U_N$ immer noch um rund 30 % unter der bei der Normalausführung auftretenden Spannung (siehe Tabelle).

Bei einer 4poligen Wicklung nach Anspruch 2 mit maximal vier nebeneinanderliegenden Spulengruppen-Schaltverbindungen im Wickelkopf treten als höchste Spannungen am Phasenwechsel ca. 0,63 $U_N$ auf. Durch eine andere Schaltvariante, die drei Kreuzungsstellen mit fünf Schaltverbindungen aufweist, kann die maximale Spannung wie bei der symmetrischen Ausführung auch auf den Wert der Phasenspannung begrenzt werden. Eine 6polige Drehstromwicklung läßt sich bei unveränderten Maximalspannungen am Phasenwechsel statt mit sechs auch mit maximal nur fünf Schaltverbindungen zwischen den Spulengruppen ausführen.

In der Tabelle sind in Abhängigkeit von der Polzahl 2p die Zahl der maximal nebeneinander zu verlegenden Schaltverbindungen der in Reihe geschalteten Spulengruppen für eine Drehstromwicklung A mit Spulengruppen-Anordnung und -Schaltung nach der Erfindung, für eine Wicklung B in symmetrischer Anordnung nach DE-PS 28 41 315 und für eine übliche Drehstromwicklung C angegeben. Ferner sind die Maximalspannungen am Phasenübergang relativ zur Netzspannung und die maximalen Absolutwertsummen $|U_1| + |U_2|$ sowie die zugehörigen Minimalwert $|U_1|_{min}$, $|U_2|_{min}$ der Nachbarpotentiale jeweils als Vielfaches der Spulengruppenspannung $U_{SG}$ für die genannten Wicklungen A, B und C gegenübergestellt.

Zur näheren Erläuterung der Erfindung zeigen :

Figur 1 bis 3 Beispiele für die räumlich nebeneinanderliegende Anordnung der sechs Wicklungsanschlüsse innerhalb des Umfangsbereiches eines Polpaares,

Figur 4 ein Strukturschema für die Reihenfolge der Spulengruppen innerhalb der verschiedenen Stränge längs des Umfanges gemäß Patentanspruch 3,

Figur 5 bis 10 die vollständigen Zonenpläne mit Durchflutungsrichtungen und Potentialverteilungen für beide Sternverbindungen sowie sämtliche Schaltverbindungen für 4- bis 16polige Drehstromwicklungen, deren Stränge entsprechend Fig. 4 strukturiert sind.

Figuren 11, 12 zwei anders geschaltete Ausführungsvarianten einer 4poligen Drehstromwicklung,

Figur 13 eine Ausführungsvariante einer 6poligen Drehstromwicklung mit weniger Schaltverbindungen,

Figur 14 eine 8polige Drehstromwicklung mit zwei Parallelzweigen je Strang.

In der Zeichnung ist die Zugehörigkeit zu den drei Strängen jeweils weiß, schraffiert bzw. eng schraffiert dargestellt.

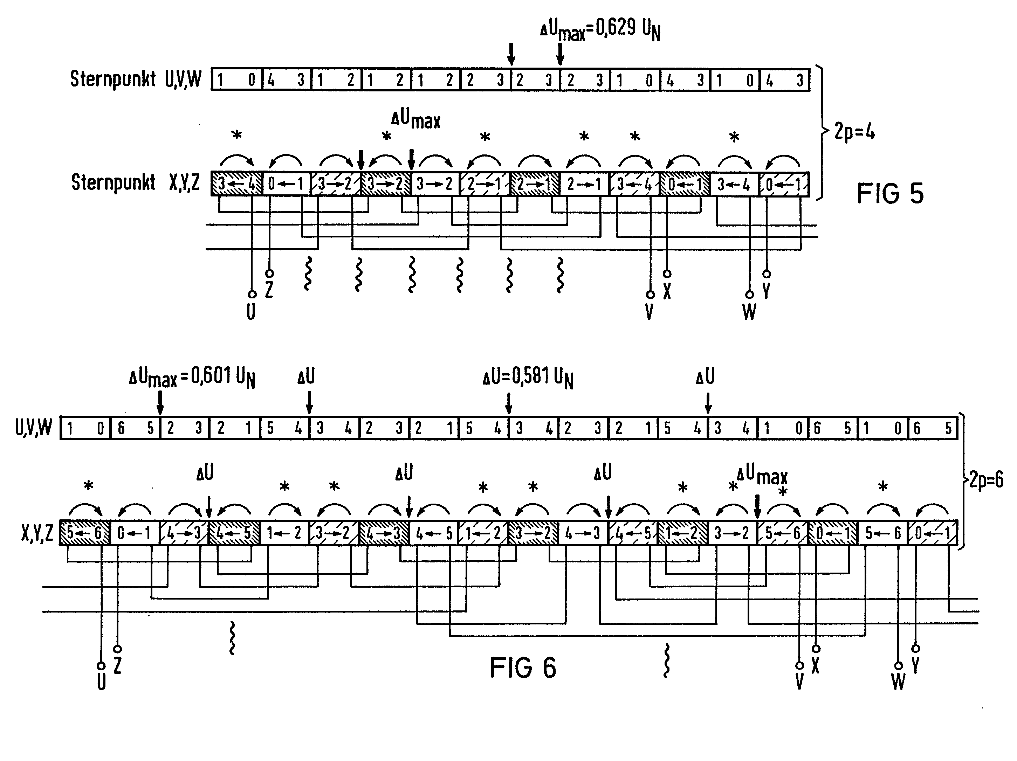

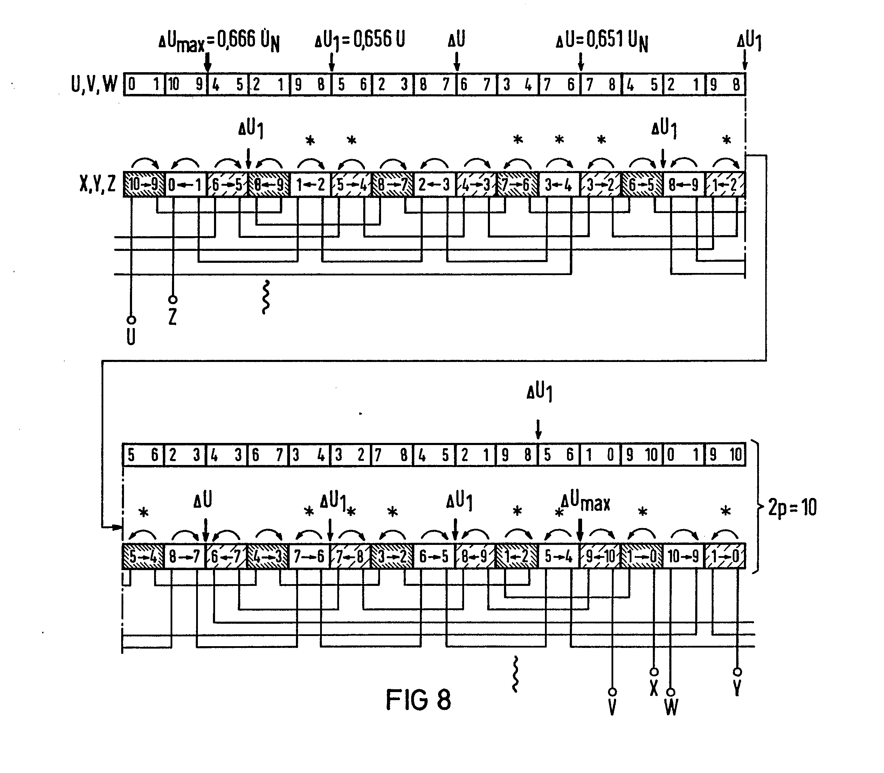

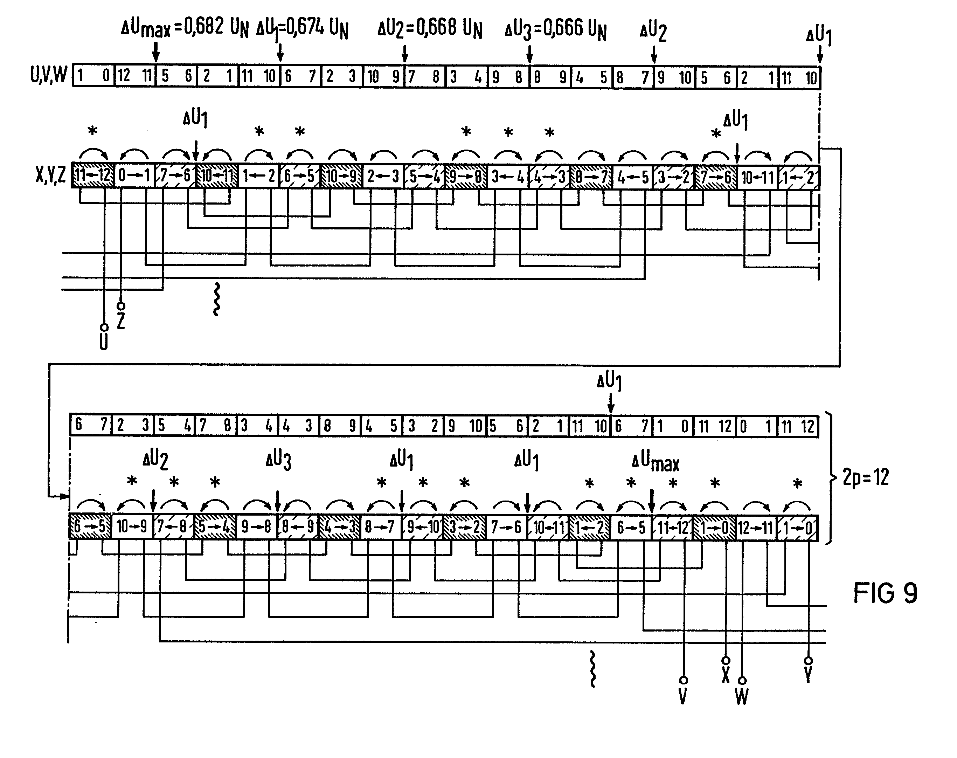

Bei den Fig. 5 bis 13 sind in den Zonenplänen neben den von Spulengruppe zu Spulengruppe wechselnden Durchflutungsrichtungen ( ⌢ bzw. ⌢ ) auch die jeweiligen Potentialwerte als Vielfaches der Spulengruppenspannung $U_{SG}$ und die Potentialabbaurichtungen (→ bzw. ←) eingetragen. Die « Gegen »-Spulengruppen sind mit * gekennzeichnet. An den mit Schlangenlinien bezeichneten Stellen tritt die jeweils größte Zahl von nebeneinanderliegenden bzw. sich kreuzenden Schaltverbindungen zwischen den Spulengruppen auf. Die dicken, senkrechten Pfeile markieren die Phasenübergänge mit der maximalen Spannung $\Delta U_{max}$, die dünnen senkrechten Pfeile geben die Stellen mit gleichhoher maximaler Absolutwertsumme $|U_1| + |U_2|$, jedoch geringfügig niedrigerer Spannungsbeanspruchung an. Neben der Potentialverteilung bei Sternpunktbildung an den Strangenden X, Y, Z ist jeweils auch die komplementäre Potentialverteilung bei Umsternung auf die Strangenden U, V, W angegeben.

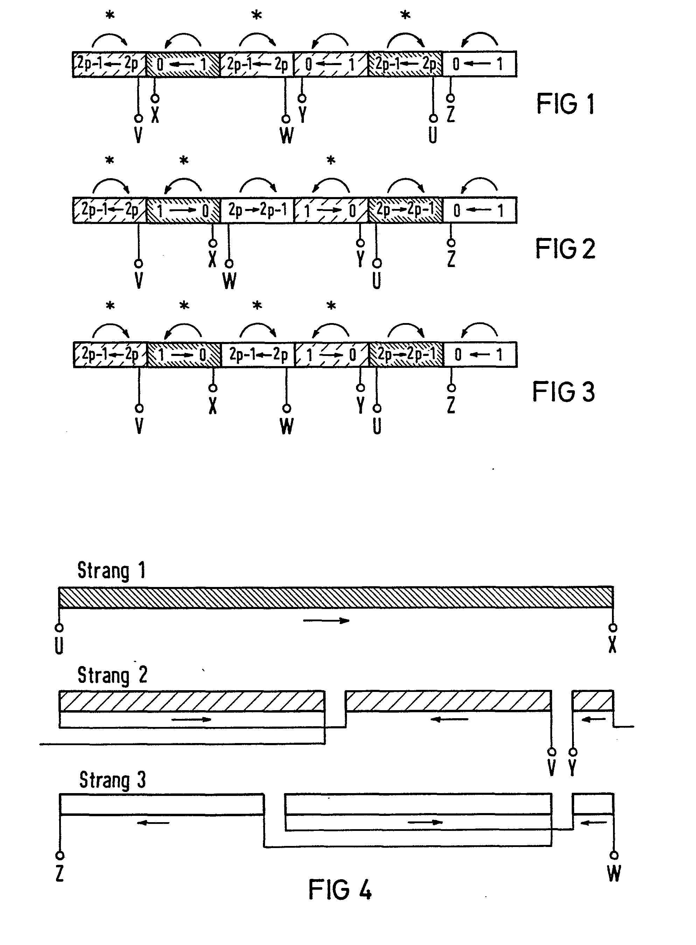

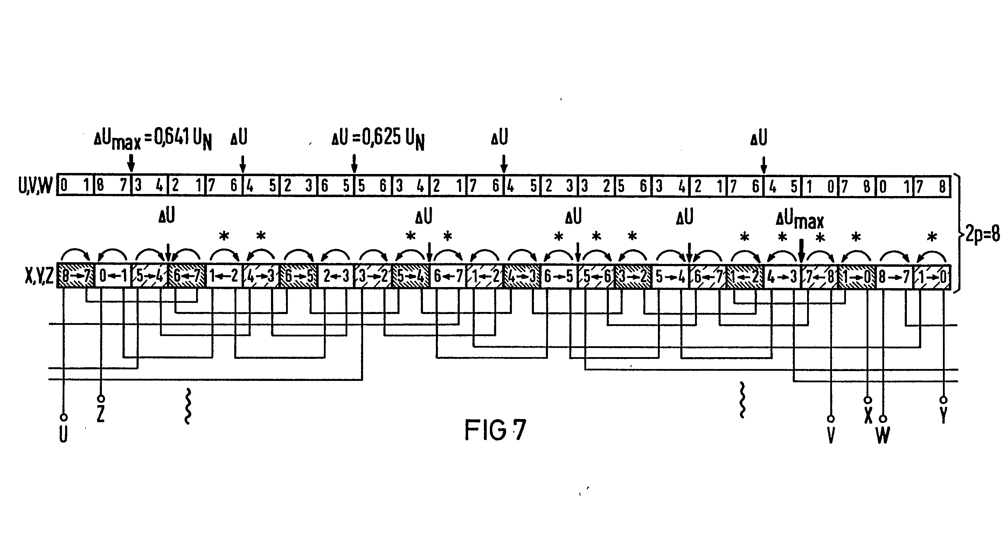

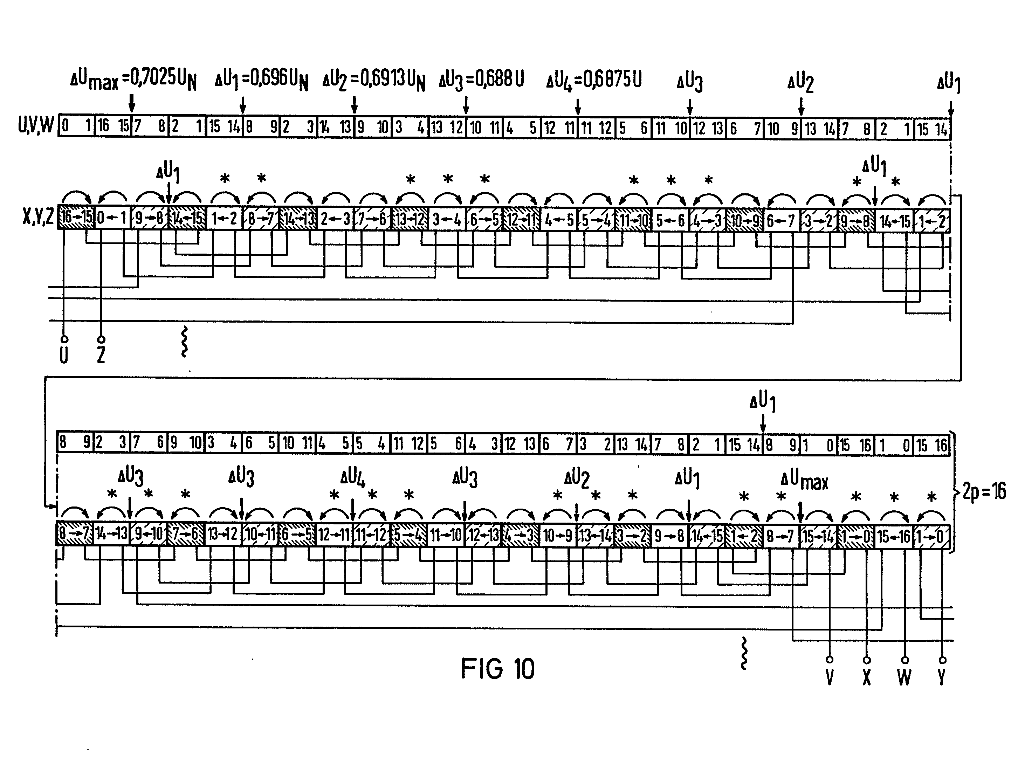

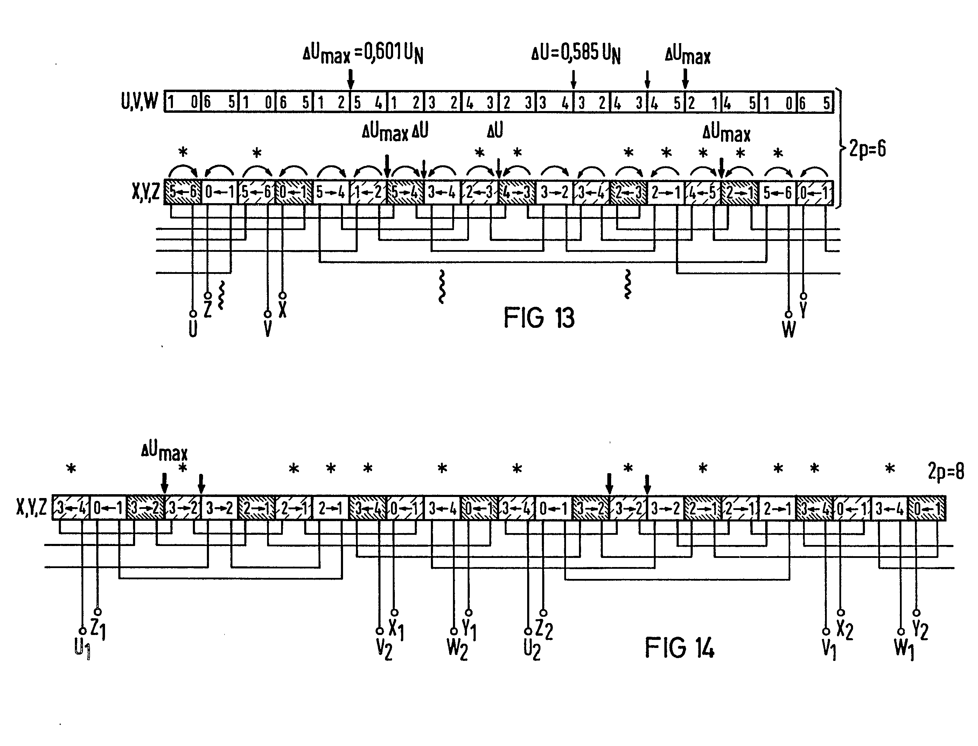

In charakteristischer Weise sind bei der erfindungsgemäßen Drehstromwicklung alle sechs Wicklungsenden jeweils räumlich nebeneinander innerhalb eines Polpaares angeordnet, wie es z. B. in den Fig. 1 bis 3 angedeutet ist. Bei der Anordnung gemäß Fig. 1 ist jedem « Eingangs »-Anschluß (U, V, W) ein « Ausgangs »-Anschluß (X, Y, Z) unmittelbar benachbart und die Absolutwertsumme der Nachbarpotentiale an den in diesem Bereich liegenden Phasenübergängen ist konstant und beträgt $|U_1| + |U_2| =$ 2p $U_{SG}$. Eine solche Anordnung wird insbesondere bei den kleineren Polpaarzahlen vorgesehen, wie es die Fig. 10, 11, 12 für 4polige und die Fig. 6 und 13 für 6polige Wicklungen zeigen, um erhöhte Spannungsbeanspruchungen im Bereich der Anschlußenden zu vermeiden. Bei höheren Polzahlen können auch gemäß den Fig. 2, 3 oder analog dazu ausgeführte Anordnungen gewählt werden, bei denen jeweils nur zwei oder nur ein « Eingangs »- und « Ausgangs »-Anschluß unmittelbar benachbart sind und die Absolutwertsummen der Nachbarpotentiale an den in diesem Polpaar liegenden Phasenübergängen zwischen (2p — 1) $U_{SG}$ und (2p + 1) $U_{SG}$ differieren. Siehe Beispiele in den Fig. 7 bis 10).

Wie bereits in der Figurenauflistung erwähnt wurde, sind die 4- bis 16poligen Drehstromwicklungen nach Fig. 5 bis 10 jeweils nach dem gleichen in Fig. 4 gezeigten universell anwendbaren Strukturschema aufgebaut.

Dem ersten Strang U-X folgen jeweils alle 2p Spulengruppen (in Umfangsrichtung) der Reihe nach von links nach rechts aufeinander. Die beiden anderen Stränge sind quasi spiegelbildlich zueinander aufgebaut und bestehen aus einem p nebeneinanderliegenden Spulengruppen aufweisenden mittleren Wicklungsabschnitt, an den auf der einen Seite ein gegensinnig dazu durchlaufender, aus (p — 1) Spulengruppen bestehender zweiter Wicklungsabschnitt und auf der anderen Seite eine einzelne Spulengruppe anschließt. Der zweite Strang beginnt daher mit seinem « Eingangs »-Anschluß V an dem von rechts nach links durchlaufenen, (p — 1) Spulengruppen umfassenden Wicklungsabschnitt und endet mit dem « Ausgangs »-Anschluß Y an der Einzelspulengruppe, wogegen der dritte Strang mit W an der Einzelspule beginnt und mit Z an dem ebenfalls von rechts nach links durchlaufenen Wicklungsabschnitt mit (p — 1) Spulengruppen endet. Zum Aneinanderfügen der genannten Wicklungsabschnitte werden bei den Strängen V-Y und W-Z jeweils zwei lange, über den halben Maschinenumfang reichende Schaltverbindungen benötigt.

Wie in den Beispielen der Fig. 5 bis 10 detailliert gezeigt ist, sind die einzelnen Spulengruppen innerhalb dieser Reihenfolge derart als « Mit »- oder « Gegen »-Spulen ausgebildet und angeschlossen, daß die an den Phasenübergängen auftretenden maximalen Absolutwertsummen der Nachbarpotentiale bei der 4poligen Wicklung nach Fig. 5 $|U_1| + |U_2| = (|3| + |2|)\, U_{SG} = 5\, U_{SG}$ und bei den sechs- und höherpoligen Wicklungen $|U_1| + |U_2| = (3p — 2)\, U_{SG}$ betragen. Letztere treten jeweils an den mit senkrechten Pfeilen gekennzeichneten insgesamt (p + 1) Stellen des Umfanges auf, wobei sich die höchste Spannungsbeanspruchung $\Delta U_{max}$ an den beiden mit dicken Pfeilen gekennzeichneten Phasenübergängen ergibt, an denen eines der beiden Nachbarpotentiale seinen Kleinstwert $U_{1,2\,min} = (p — 1)\, U_{SG}$ aufweist. Die zugehörigen Spannungen sind bei den Figuren jeweils angegeben.

An maximal nebeneinander zu verlegenden Spulengruppen-Schaltverbindungen ergeben sich bei den gemäß dem Strukturschema Fig. 4 ausgeführten Wicklungen für 2p = 4 insgesamt sechs Kreuzungsstellen mit je vier Verbindungen (nach Fig. 5). Bei allen anderen Polzahlen 2p $\geq$ 6 werden an zwei Umfangsstellen maximal sechs Schaltverbindungen benötigt, die aber jeweils nur über den Umfangsbereich einer Spulengruppe zu führen sind und an den mit Schlangenlinien gekennzeichneten Stellen stets bei den übernächsten Spulengruppen links und rechts neben dem die Anschlußstellen aufweisenden Polpaar zu liegen kommen.

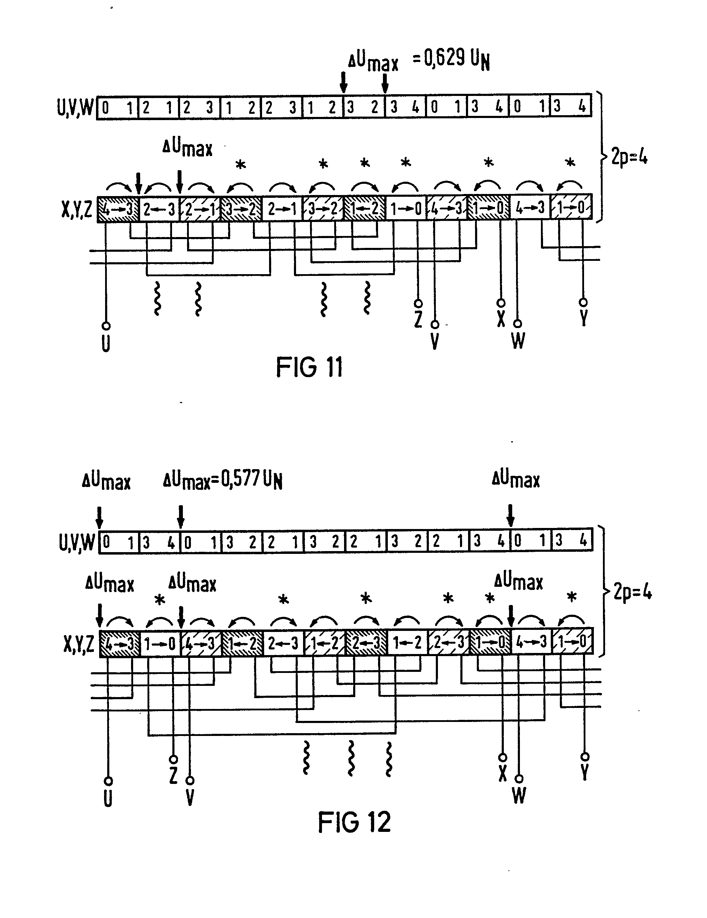

Die Ausführungsvarianten nach Fig. 11 bis 13 für 4- und 6polige Drehstromwicklungen nach der Erfindung weisen eine von Fig. 4 abweichende Spulenfolge der drei Stränge auf.

Bei der 4poligen Wicklung nach Fig. 11 folgen in allen drei Strängen die einzelnen Spulengruppen längs des Umfanges unmittelbar hintereinander, so daß sich bei unveränderter Zahl nebeneinander zu verlegender Schaltverbindungen insgesamt kürzere Verbindungslängen ergeben. Hinsichtlich der maximalen Spannungsbeanspruchung bestehen gegenüber Fig. 5 keine Unterschiede.

Gemäß Fig. 12 lassen sich die einzelnen Spulengruppen auch so ausbilden und hinsichtlich ihrer potentialmäßigen Reihenfolge derart aneinanderfügen, daß an allen Phasenübergängen die gleichen Absolutwertsummen der Nachbarpotentiale von $|U_1| + |U_2| = 4\, U_{SG}$ auftreten. Die maximal auftretende Spannung ist damit, wie bei der symmetrischen Ausführung nach DE-PS 28 41 415, auf den Wert der Phasenspannung begrenzt, welche an den drei Stellen der Nachbarpotentiale (4 + 0) $U_{SG}$ auftritt. Bei den Schaltverbindungen müssen auf der den Anschlußenden gegenüberliegenden Umfangszone bei drei nebeneinanderliegenden Phasenübergängen Kreuzungsstellen mit fünf Schaltverbindungen in Kauf genommen werden.

Die in Fig. 13 dargestellte Variante einer 6poligen Drehstromwicklung benötigt gegenüber Fig. 6 wickelkopfseitig statt sechs nur maximal fünf nebeneinander zu verlegende Schaltverbindungen ; hier allerdings an drei Stellen des Umfanges. Die maximale Spannungsbeanspruchung bleibt mit $\Delta U_{max} = 0{,}601\, U_N$ unverändert.

Neben der allen bisherigen Ausführungsbeispielen zugrundeliegenden Reihenschaltung der jeweils 2p Spulengruppen jeden Stranges sind in analoger Weise auch Abwandlungen der Erfindung für insbesondere höherpolige Wicklungen mit zwei, drei oder mehreren Parallelzweigen möglich. So können z. B. ausgehend von den behandelten Beispielen Wicklungen für die doppelte Polzahl mit zwei Parallelzweigen durch Aneinanderfügen zweier gleicher Wicklungsanordnungen gebildet werden, wie es in Fig. 14 für eine 8polige Wicklung angedeutet ist, die aus zwei aneinandergefügten Teilsystemen gemäß Fig. 5 besteht. Dabei wäre auch ein Auftrennen der Teilsysteme an potentialmäßig geeigneten Stellen und ein verschachteltes Zusammenfügen möglich. Abhängig von der Zahl und räumlichen Verteilung der einzelnen Wicklungszweige müssen bei Parallelschaltungen u. a. längere Schaltverbindungen mit einer gegebenenfalls erhöhten Zahl von Kreuzungsstellen in Kauf genommen werden.

Als weitere Ausführungsvariante lassen sich statt der bei allen Beispielen vorliegenden durchwegs hälftigen Aufteilung in « Mit »- und « Gegen »-Spulengruppen auch Abwandlungen ausführen, bei denen die Zahl der vorhandenen « Gegen »-Spulengruppen größer oder kleiner als die der « Mit »-Spulengruppen ist. So können alle diejenigen Spulengruppen, die weder bei Einspeisung an U, V, W noch nach dem Umsternen an der Bildung der maximalen Absolutwertsumme $|U_1| + |U_2| = (3p — 2)\, U_{SG}$ beteiligt sind, an sich beliebig ausgeführt werden, was z. B. bei der 16poligen Wicklung nach Fig. 6 bei den im Klemmenbereich liegenden mittleren vier Spulengruppen sowie den Spulengruppen mit den Potentialstufen 8-7, 7-6, 4-3 und 3-2 beim ersten Strang (U-X) der Fall ist. Anstatt die genannten acht Spulengruppen gemäß Fig. 10 hälftig als « Mit »-« Gegenspulen » auszubilden, hätte man sie auch alle gleich ausführen oder beliebig anders aufteilen können.

4

Tabelle

| Polzahl 2p | Anzahl der maximal nebeneinanderliegenden Schalt-verbindungen bei Wicklungsausführung | | | Maximale Spannungsbeanspruchung am Phasenübergang | | | | | | $|U_{1,2}|_{min}$ am Phasenüber-gang als Vielfaches von $U_{SG}$ bei Wicklungsausführung | | | Fig. |
| | | | | $U_{max} / U_N$ bei Wicklungsausführung | | | $|U_1|+|U_2|$ als Vielfaches von $U_{SG}$ bei Wicklungsausführung | | | | | | |
| | A | B | C | A | B | C | A | B | C | A | B | C | |
| 4 | 4(5) | 5 | 4 | 0,629 (0,577) | 0,577 | 0,878 | 5 (4) | 4 | 7 | 2 (0) | 0 | 3 | 5,11,12 |
| 6 | 6(5) | 6 | 4 | 0,601 | 0,577 | 0,918 | 7 | 6 | 11 | 2 | 0 | 5 | 6, 12 |
| 8 | 6 | 8 | 4 | 0,641 | 0,577 | 0,938 | 10 | 8 | 15 | 3 | 0 | 7 | 7 |
| 10 | 6 | 9 | 4 | 0,666 | 0,577 | 0,950 | 13 | 10 | 19 | 4 | 0 | 9 | 8 |
| 12 | 6 | 11 | 4 | 0,682 | 0,577 | 0,959 | 16 | 12 | 23 | 5 | 0 | 11 | 9 |
| 14 | 6 | 12 | 4 | 0,694 | 0,577 | 0,965 | 19 | 14 | 27 | 6 | 0 | 13 | – |
| 16 | 6 | 14 | 4 | 0,702 | 0,577 | 0,969 | 22 | 16 | 31 | 7 | 0 | 15 | 10 |

Wicklungsausführung A : Erfindung
Wicklungsausführung B : nach DE-PS 28 41 415
Wicklungsausführung C : übliche Drehstromwicklung

**Patentansprüche**

1. Drehstromwicklung für eine Hochspannungsmaschine mit beliebiger Polzahl $2p \geqq 4$ und in Stern geschalteten Strängen, deren abwechselnd gegensinnig angeschlossene Spulengruppen hinsichtlich der Durchflutung und Potentialrichtung mit- und gegensinnig geschaltet sind und diese « Mit »- und « Gegen »-Spulengruppen derart längs des Umfanges verteilt angeordnet und hintereinandergeschaltet sind, daß eine Verminderung der zwischen benachbarten Spulenseiten an den Phasenübergängen anstehenden maximalen Spannungen erreicht ist, gekennzeichnet durch eine solche unsymmetrisch verteilte Anordnung und Hintereinanderschaltung der einzelnen Spulengruppen der drei Wicklungsstränge längs des Umfanges, daß beim Umsternen, d. h. beim Vertauschen der Klemmen (U, V, W mit X, Y, Z) die an den Phasenübergängen anstehenden maximalen Spannungen unverändert bleiben, wobei die sechs Wicklungsenden (U, V, W ; X, Y, Z) räumlich nebeneinanderliegend innerhalb eines Polpaares angeordnet sind, die bei Reihenschaltung der jeweils 2p Spulengruppen eines Stranges an den Phasenübergängen auftretenden Absolutwertsummen der Nachbarpotentiale maximal $|U_1| + |U_2| = (3p - 2) U_{SG}$ betragen, worin $U_{SG}$ die Spannung einer Spulengruppe bedeutet, und zur wickelkopfseitigen Verbindung der einzelnen Spulengruppen im allgemeinen vier und nur über einzelne jeweils kurze Umfangsstrecken bis zu sechs Schaltverbindungen nebeneinander verlegt sind (Fig. 1 bis 3).

2. Drehstromwicklung für eine Hochspannungsmaschine mit der Polzahl $2p = 4$ und in Stern geschalteten Strängen, deren abwechselnd gegensinnig angeschlossene Spulengruppen hinsichtlich der Durchflutung und Potentialrichtung mit- und gegensinnig geschaltet sind und diese « Mit »- und « Gegen »-Spulengruppen derart längs des Umfanges verteilt angeordnet und hintereinandergeschaltet sind, daß eine Verminderung der zwischen benachbarten Spulenseiten an den Phasenübergängen anstehenden maximalen Spannungen erreicht ist, dadurch gekennzeichnet, daß die « Mit »- und « Gegen »-Spulengruppen so ausgebildet und angeschlossen sind, daß an den Phasenübergängen mit der höchsten Spannungsbeanspruchung die Absolutwertsumme der Nachbarpotentiale $|U_1| + |U_2| = 5 U_{SG}$ bei einem jeweiligen kleinsten Potentialwert $U_{1,2 \, min} = 2 U_{SG}$ beträgt und im Wickelkopf maximal vier Schaltverbindungen nebeneinander verlegt sind (Fig. 5, 11).

3. Drehstromwicklung nach Anspruch 1 oder 2, dadurch gekennzeichnet, daß die jeweils 2p-Spulengruppen der Wicklungsstränge hinsichtlich ihrer potentialmäsigen Reihenfolge beim einen Wicklungsstrang längs des Umfanges unmittelbar hintereinanderfolgen und die beiden anderen Stränge in quasi spiegelbildlicher Anordnung zueinander jeweils aus einem p nebeneinanderliegenden Spulengruppen aufweisenden mittleren Wicklungsabschnitt, an dem auf der einen Seite ein gegensinnig dazu durchlaufender aus (p — 1) Spulengruppen bestehender zweiter Wicklungsabschnitt schließt, zusammengesetzt sind, wobei der eine Wicklungsstrang mit der einzelnen Spulengruppe und der andere mit dem aus (p — 1) Spulengruppen bestehenden Wicklungsabschnitt beginnt (Fig. 4 bis 10).

4. Drehstromwicklung nach Anspruch 1 für Polzahl $2p = 6$ dadurch gekennzeichnet, daß die « Mit »- und « Gegen »-Spulengruppen so ausgebildet und angeschlossen sind, daß an den Phasenübergängen mit der höchsten Spannungsbeanspruchung die jeweiligen kleinsten Potentialwerte $U_{1,2 \, min} = (p - 1) U_{SG}$ betragen (Fig. 6 bis 10, Fig. 13).

5. Drehstromwicklung nach Anspruch 1 für Polzahl $2p = 4$, dadurch gekennzeichnet, daß die « Mit »- und « Gegen »-Spulengruppen so ausgebildet und angeschlossen sind, daß an den Phasenübergängen mit der höchsten Spannungsbeanspruchung die Absolutwertsumme der Nachbarpotentiale $|U_1| + |U_2| = 4 U_{SG}$ bei einem jeweiligen kleinsten Potentialwert $U_{1,2 \, min} = 0$ beträgt und im Wickelkopf maximal fünf Schaltverbindungen nebeneinander verlegt sind (Fig. 12).

6. Drehstromwicklung nach Anspruch 4 für Polzahl $2p = 6$, gekennzeichnet durch maximal fünf nebeneinander verlegte Schaltverbindungen (Fig. 13).

7. Drehstromwicklung nach Anspruch 1, dadurch gekennzeichnet, daß an den im Bereich der herausgeführten Wicklungsenden (U, V, W ; X, Y, Z) liegenden Phasenübergängen die Absolutwertsumme der Nachbarpotentiale konstant ist und $|U_1| + |U_2| = 2p \cdot U_{SG}$ beträgt (Fig. 1, 5, 6 und 11 bis 13).

8. Drehstromwicklung nach Anspruch 1, dadurch gekennzeichnet, daß die im Bereich der herausgeführten Wicklungsenden (U, V, W ; X, Y, Z) liegenden Phasenübergänge unterschiedliche Absolutwertsummen $|U_1| + |U_2|$ im Bereich von $(2p - 1) \cdot U_{SG}$ bis $(2p + 1) U_{SG}$ aufweisen (Fig. 2, 3, 7 und 10).

9. Drehstromwicklung nach Anspruch 1 mit parallelen Wicklungszweigen, dadurch gekennzeichnet, daß sich eine entsprechend den Bemessungskriterien für die halbe Polzahl gestaltete Spulengruppenanordnung in Umfangsrichtung mindestens zwei Mal wiederholt (Fig. 14).


**Claims**

1. Three phase current winding for a high voltage machine with any number of poles $2p \geqq 4$ and star-connected phase windings whose coil groups connected alternately in opposite direction are connected co- and counter-directionally with regard to the throughflow and potential direction, and these « with » and « against » coil groups are so distributed along the circumference and so connected one behind the other that a reduction of the maximum voltages occurring between adjacent coil sides at the phase transitions is achieved, characterised by such an unsymmetrically distributed arrangement and series-connection of the individual coil groups of the three phase windings along the circumference, that during re-starring, i. e. exchanging of the terminals (U, V, W with X, Y, Z), the maximum voltages occurring at the phase transitions remain unchanged, and the six winding ends (U, V, W ; X, Y, Z) are arranged to be spatially adjacent within a pole pair, the absolute value totals of the adjacent potentials occurring at the phase transitions with series-connection of the respective 2p coil groups of a phase winding, amount at the most to $|U_1| + |U_2| = (3p - 2) U_{SG}$, wherein $U_{SG}$ means the voltage of a coil group, and for the winding head-side connection of the individual coil groups, generally four circuit connections and, over only individual respectively short distances of the circumference up to six circuit connections, are laid next to one another (Fig. 1 to 3).

2. Three phase current winding for a high voltage machine with the pole number 2p = 4 and star-connected phase windings whose coil groups, connected alternately in opposite direction, are connected co- and counter-directionally with regard to the throughflow and potential direction and these « with » and « against » coil groups are distributed along the circumference and are series-connected in such a way that a reduction in the maximum voltages occurring between adjacent coil sides at the phase transitions is achieved, characterised in that the « with » and « against » coil groups are so constructed and connected that at the phase transitions with the highest voltage load the absolute value total of the adjacent potentials amounts to $|U_1| + |U_2| = 5 U_{SG}$ with a respective lowest potential value $U_{1,2\ min} = 2 U_{SG}$, and in the winding head at the most four circuit connections are laid next to one another (Fig. 5, 11).

3. Three phase current winding according to claim 1 or 2, characterised in that the respective 2p coil groups of the phase windings follow directly behind one another along the circumference with regard to their potential sequence in the case of the one phase winding, and the two other phase windings are composed, in almost mirror-image arrangement to one another, respectively of a middle winding section having p adjacent coil groups, to which winding section on one side a second winding section consisting of (p − 1) coil groups and running in counter direction to this is connected, whereby the one phase winding begins with the individual coil group and the other begins with the winding section consisting of (p − 1) coil groups (Figs. 4 to 10).

4. Three phase current winding according to claim 1 for pole number 2p = 6, characterised in that the « with » and « against » coil groups are so constructed and connected that at the phase transitions with the highest voltage load, the respective lowest potential values amount to $U_{1,2\ min} = (p - 1) U_{SG}$ (Figs. 6 to 10, Fig. 13).

5. Three phase current winding according to claim 1 for pole number 2p = 4, characterised in that the « with » and « against » coil groups are so constructed and so connected that at the phase transitions with the highest voltage load the absolute value total of the adjacent potentials amounts to $|U_1| + |U_2| = 4 U_{SG}$ with a respective lowest potential value $U_{1,2\ min} = 0$ and in the winding head at the most five circuit connections are laid next to one another (Fig. 12).

6. Three phase current winding according to claim 4 for pole number 2p = 6, characterised by at the most five circuit connections laid next to one another (Fig. 13).

7. Three phase current winding according to claim 1, characterised in that at the phase transitions lying in the region of the drawn-out winding ends (U, V, W ; X, Y, Z) the absolute value total of the adjacent potentials is constant and amounts to $|U_1| + |U_2| = 2p \cdot U_{SG}$ (Figs. 1, 5, 6 and 11 to 13).

8. Three phase current winding according to claim 1, characterised in that the phase transitions lying in the region of the drawn-out winding ends (U, V, W ; X, Y, Z) have different absolute value totals $|U_1| + |U_2|$ in the range of from $(2p - 1) \cdot U_{SG}$ to $(2p + 1) U_{SG}$ (Figs. 2, 3, 7 and 10).

9. Three phase current winding according to claim 1, with parallel winding branches, characterised in that a coil group arrangement, constructed in accordance with the measurement criteria for the half pole number, is repeated in the circumferential direction at least twice (Fig. 14).

**Revendications**

1. Enroulement à courant triphasé pour une machine à haute tension comportant un nombre quelconque de pôles $2p \geqq 4$ et des faisceaux branchés en étoile et dont des groupes de bobines, raccordés de façon alternée en sens opposé, sont raccordés dans le même sens et dans des sens opposés du point de vue du flux de courant et du sens du potentiel et que ces groupes de bobines « raccordés dans le même sens » et « raccordés en sens opposé » sont répartis sur la périphérie et sont branchés en série de telle sorte que l'on obtient une réduction des tensions maximales appliquées aux transitions entre phases, entre des côtés de bobines voisins, caractérisé par une répartition dissymétrique et un branchement en série des différents groupes de bobines des trois faisceaux d'enroulements le long de la périphérie, tels que lors de la commutation en étoile, c'est-à-dire de la permutation des bornes (U, V, W avec X, Y, Z), les tensions maximales apparaissant dans les transitions entre phases restent inchangées, les six extrémités de l'enroulement (U, V, W ; X, Y, Z) étant disposées côte à côte dans l'espace entre un couple de pôles, les sommes des valeurs absolues des potentiels voisins, qui sont obtenues lors du raccordement en série des 2p groupes de bobines respectifs d'un faisceau, dans les transitions entre phases sont égales au maximum à $|U_1| + |U_2| = (3p - 2)$ $U_{SG}$, $U_{SG}$ représentant la tension d'un groupe de bobines, et en général quatre et jusqu'à six connexions, uniquement sur des sections périphériques individuelles courtes, sont câblés côte à côte en vue de relier, sur le côté de la tête de bobinage, les différents groupes de bobines (figures 1 à 3).

2. Enroulement à courant triphasé pour une machine à haute tension comportant un nombre quelconque de pôles 2p = 4 et des faisceaux branchés en étoile et dont les groupes de bobines, raccordés de façon alternée en sens opposé, sont raccordés dans le même sens et dans des sens opposés du point de vue du flux de courant et du sens du potentiel et que ces groupes de bobines « raccordés dans le même sens » et « raccordés en sens opposé » sont répartis sur la périphérie et sont branchés en série de telle sorte que l'on obtient une réduction des tensions maximales appliquées aux transitions entre phases, entre des côtés de bobines voisins, caractérisé par le fait que les groupes de bobines « raccordés dans le même sens » et « raccordés en sens opposé » sont agencés et raccordés de manière que dans les transitions entre phases dans lesquelles est présente la contrainte de tension maximum, la somme des valeurs absolues des potentiels voisins est égale à $|U_1| + |U_2| = 5 U_{SG}$ pour une valeur de potentiel minimum respective $U_{1,2 \, min} = 2 U_{SG}$, et qu'au maximum quatre connexions sont câblées côte à côte dans la tête de bobinage (figures 5, 11).

3. Enroulement à courant triphasé suivant la revendication 1 ou 2, caractérisé par le fait que les groupes respectifs de 2p bobines des faisceaux d'enroulement se succèdent directement le long de la périphérie du point de vue de leur succession en rapport avec le potentiel, pour un faisceau d'enroulement et que les deux autres faisceaux sont formés, dans des dispositions réciproques quasiment symétriques, par la réunion respectivement d'une section médiane d'enroulement comportant p groupes de bobines disposés côte à côte et à laquelle se raccorde d'un côté, une seconde section d'enroulement disposée en sens opposé de la section d'enroulement médiane et constituée par (p — 1) groupes de bobines, auquel cas un faisceau d'enroulement commence par le groupe individuel de bobines et l'autre faisceau d'enroulement commence par le faisceau d'enroulement constitué par (p — 1) groupes de bobines (figures 4 à 10).

4. Enroulement à courant triphasé suivant la revendication 1, pour un nombre 2p = 6, caractérisé par le fait que les groupes de bobines « raccordés dans le même sens » et « raccordés en sens opposé » sont agencés et raccordés de telle sorte qu'au niveau des transitions entre phases auquel est appliquée la tension maximum, les valeurs de potentiel respectives les plus faibles sont égales à $U_{1,2 \, min} = (p — 1) U_{SG}$ (figures 6 à 10, figure 13).

5. Enroulement à courant triphasé suivant la revendication 1 pour un nombre de pôles 2p = 4, caractérisé par le fait que les groupes de bobines « raccordés dans le même sens » et « raccordés en sens opposé » sont agencés et raccordés de telle sorte que dans les transitions entre phases auxquelles la contrainte maximum de tension est appliquée, la somme des valeurs absolues du potentiel voisin est égale à $|U_1| + |U_2| = 4 U_{SG}$ pour une valeur de potentiel respective la plus faible $U_{1,2 \, min} = 0$, et qu'au maximum cinq connexions sont câblées côte à côte dans la tête de bobinage (figure 12).

6. Enroulement à courant triphasé suivant la revendication 4, pour un nombre de pôles 2p = 6, caractérisé par au maximum cinq connexions câblées côte à côte (figure 13).

7. Enroulement à courant triphasé suivant la revendication, caractérisé par le fait que dans les transitions entre phases situées dans la zone des extrémités de bobinage (U, V, W, X, Y, Z) ressorties, la somme des valeurs absolues des potentiels voisins est constante et est égale à $|U_1| + |U_2| = 2p \cdot U_{SG}$ (figures 1, 5, 6 et 11 à 13).

8. Enroulement à courant triphasé suivant la revendication 1, caractérisé par le fait que les transitions entre phases, situées dans la zone des extrémités de bobinages (U, V, W ; X, Y, Z) ressorties possèdent des sommes différentes de valeurs absolues $|U_1| + |U_2|$ se situant dans la gamme allant de $(2p — 1) \cdot U_{SG}$ à $(2p + 1) U_{SG}$ (figures 2, 3, 7 et 10).

9. Enroulement à courant triphasé suivant la revendication 1, comportant des branches parallèles d'enroulement, caractérisé par le fait qu'un ensemble de groupes de bobines conformé pour la moitié du nombre de pôles en fonction des critères de dimensionnement se répète au moins deux fois suivant la direction périphérique (figure 14).

FIG 1

FIG 2

FIG 3

Strang 1

Strang 2

Strang 3

FIG 4

Sternpunkt U,V,W

$\Delta U_{max} = 0,629\ U_N$

$\Delta U_{max}$

Sternpunkt X,Y,Z

$2p=4$

**FIG 5**

U,V,W

$\Delta U_{max} = 0,601\ U_N$

$\Delta U = 0,581\ U_N$

$\Delta U_{max}$

X,Y,Z

$2p=6$

**FIG 6**

FIG 7

ΔU$_{max}$ = 0,641 U$_N$  ΔU  ΔU = 0,625 U$_N$  ΔU  ΔU

U,V,W | 0 | 1 | 8 | 7 | 3 | 4 | 2 | 1 | 7 | 6 | 4 | 5 | 2 | 3 | 6 | 5 | 5 | 6 | 3 | 4 | 2 | 1 | 7 | 6 | 4 | 5 | 2 | 3 | 3 | 2 | 5 | 6 | 3 | 4 | 2 | 1 | 7 | 6 | 4 | 5 | 1 | 0 | 7 | 8 | 0 | 1 | 7 | 8 |

ΔU  ΔU  ΔU  ΔU  ΔU$_{max}$

2p=8

X,Y,Z | 8→7 | 0←1 | 5←4 | 6→7 | 1←2 | 4→3 | 6←5 | 2←3 | 3→2 | 5←4 | 6→7 | 1←2 | 4→3 | 6←5 | 5→6 | 3→2 | 5→4 | 6→7 | 1→2 | 4→3 | 7→8 | 1→0 | 8→7 | 1→0 |

* * * * * * * * * * * *

U  Z  V  X  W  Y

0 077 936

FIG 8

FIG 9

FIG 10

0 077 936

FIG 11

FIG 12

0 077 936

ΔU_max = 0,601 U_N  ΔU = 0,585 U_N  ΔU_max

U,V,W | 1 | 0 | 6 | 5 | 1 | 0 | 6 | 5 | 1 | 2 | 5 | 4 | 1 | 2 | 3 | 2 | 4 | 3 | 2 | 3 | 3 | 4 | 3 | 2 | 4 | 3 | 4 | 5 | 2 | 1 | 4 | 5 | 1 | 0 | 6 | 5 |

2p=6

ΔU_max ΔU   ΔU   ΔU_max

X,Y,Z | 5←6 | 0←1 | 5←6 | 0←1 | 5←4 | 1←2 | 5←4 | 3←4 | 2←3 | 4←3 | 3←2 | 3←4 | 2←3 | 2←1 | 4←5 | 2←1 | 5←6 | 0←1 |

U  Z  V  X  Y  W

**FIG 13**

ΔU_max

2p=8

X,Y,Z | 3←4 | 0←1 | 3←2 | 3←2 | 3←2 | 2←1 | 2←1 | 2←1 | 3←4 | 0←1 | 3←4 | 0←1 | 3←4 | 0←1 | 3←2 | 3←2 | 3←2 | 2←1 | 2←1 | 2←1 | 3←4 | 0←1 | 3←4 | 0←1 |

U₁ Z₁  V₂ X₁  W₂ Y₁  U₂ Z₂  V₁ X₂  W₁ Y₂

**FIG 14**